# EUROPÄISCHE PATENTANMELDUNG

(11) **EP 2 518 464 A2**
(43) Veröffentlichungstag der Anmeldung: **31.10.2012**
(21) Anmeldenummer: 12164461.1
(22) Anmeldetag: 17.04.2012
(51) Int. Cl.: G01L 9/00, G01L 19/02

(54) **Eigensicherer Drucksensor**

(30) Priorität: 29.04.2011 DE 102011050004
(71) Anmelder: Karl Dungs GmbH & Co.KG, 73660 Urbach (DE)
(72) Erfinder: Berger, Siegfried, 73278 Schlierbach (DE); Bös, Benjamin, 73614 Schorndorf (DE)
(74) Vertreter: Rüger, Barthelt & Abel

(57) **Zusammenfassung**

Erfindungsgemäß wird ein Druckregler zur Erfassung eines Gasdrucks mit einem Drucksensor versehen, der eine unter Federvorspannung stehende Membran aufweist. Diese betätigt einen Schaltkontakt (23), dem mindestens ein fester Kontakt (28) zugeordnet ist. Vorzugsweise ist der Schaltkontakt (23) zwischen zwei festen Kontakten (28,29) angeordnet. Durch gezieltes Einstellen der Federvorspannung wird ein Druckpunkt eingestellt, bei dem ein Kräftegleichgewicht zwischen der vorgespannten Feder und dem auf der Membran (17) wirkenden Druck vorhanden ist. Der bewegliche Kontakt (23) steht in diesem Zustand in einem indifferenten Gleichgewicht und kann sowohl den ersten festen Kontakt (28) wie auch den zweiten festen Kontakt (29) berühren. In diesem Schwebezustand wird der bewegliche Kontakt (23) von der Elektronik gehalten.

Durch Auswertend es Verhältnisses der Zeiten, in denen der bewegliche Kontakt (23) den ersten festen Kontakt (28) berührt, zu den Zeiten, in denen der bewegliche Kontakt (23) den zweiten festen Kontakt (29) berührt, lässt sich ein Signalwert ermitteln, der den Istwert des Drucks kennzeichnet. Obwohl der Drucksensor nur Schaltkontakte aufweist ermöglicht er eine analoge Druckerfassung. Vorzugsweise ist der Schaltkontakt (23) hysteresefrei.

## Beschreibung

Die Erfindung betrifft einen eigensicheren Drucksensor, insbesondere zum Aufbau eines geschlossenen Regelkreises zur Druckregelung.

Um einen Druck innerhalb gegebener Grenzen konstant zu halten, ist es nötig, diesen zunächst zu erfassen. Dazu sind Drucksensoren im Gebrauch, die einen vorhandenen Druck, bspw. Gasdruck, in ein elektrisches Signal umsetzen. Beispielsweise offenbart die DE 101 46 199 C2 dazu eine Druckmessanordnung mit einem durch eine Membran abgetrennten Druckraum und einem mit der Membran gekoppelten Messglied. Es sind Federmittel vorgesehen, die der Auslenkung des Messglieds elastisch entgegenwirken. Weiter ist eine Sensoreinheit vorgesehen, die eine Auslenkung des Messglieds erfasst. Das Messglied kann bspw. ein lichtempfindlicher Fotosensor sein, der von dem Messglied mehr oder weniger abgeschattet wird. Diese Anordnung liefert ein kontinuierliches Messsignal.

In der gleichen Druckschrift sind sogenannte Druckdosen als dem Stand der Technik zugerechnet beschrieben, bei denen die Membran einen elektrischen Kontakt betätigt. Es wird eine Anordnung beschrieben, bei der die Membran einen Magnet betätigt, dessen Feld einen Reedkontakt schaltet.

Eine solche Anordnung hat eine Schalthysterese, wie sie zum Aufbau von Zweipunktreglern gewünscht wird.

Für manche Anwendungen werden Zweipunktregler abgelehnt, denn diese führen zu einem fortwährenden Schalten des druckregelnden Ventils und vermeiden Gasdruckschwankungen nicht ganz.

Die Verwendung von Sensoren, die kontinuierliche Signale abgeben, mit denen sich stetige Regler betreiben lassen, ist hingegen vergleichsweise aufwendig. Außerdem können Abgleichprobleme auftreten. Alterung und sonstige Einflüsse, bspw. Feuchtigkeits- oder Temperatureinflüsse können zur Verschiebung der Sensorsignale führen.

Ein weiteres Problem liegt in der Überwachung von Drucksensoren. Bleibt ein schaltender Drucksensor in einer Endlage hängen, wird dies von dem Regler als Über- oder Unterdruckzustand verstanden und entsprechend der Gaszustrom ganz freigegeben oder ganz abgestellt.

Auch bei analogen Sensoren, die stetig ein Analogsignal zur Kennzeichnung des Drucks abgeben, kann ein Sensorausfall unbemerkt bleiben und dadurch Fehlzustände im angeschlossenen Regler hervorrufen.

Davon ausgehend ist es Aufgabe der Erfindung, einen einfach aufgebauten eigensicheren Drucksensor anzugeben, mit dem sich eine feinfühlige Druckreglung erreichen lässt.

Diese Aufgabe wird mit dem Drucksensor nach Anspruch 1 und mit dem Verfahren zur Druckregelung nach Anspruch 11 gelöst:
Der erfindungsgemäße Drucksensor weist mindestens einen festen Kontakt und mindestens einen Schaltkontakt auf, der mit einer druckbeaufschlagten Membran verbunden ist. Der Schaltkontakt und der feste Kontakt bilden einen Schalter, der von der druckbeaufschlagten Membran geöffnet bzw. geschlossen wird.

Zur Erfassung des Drucks wird hier ein Schaltzustand des beginnenden Öffnens bzw. des beginnenden Schließens des Schalters ausgenutzt. Während im eingeschalteten Zustand der elektrische Widerstand des Schalters Null und in dem ausgeschalteten Zustand der elektrische Widerstand unendlich ist, hat der elektrische Widerstand im Übergangszustand einen undefinierten zeitlich stark variablen Wert. Er nimmt zeitweilig Zwischenzustände zwischen Null und unendlich ein und springt in schneller Folge zwischen Null und unendlich her. Dieser Vorgang ist auch als Schalterprellen bekannt.

Bei der bevorzugten Ausführungsform liegen sich zwei feste Kontakte gegenüber und definieren miteinander einen relativ engen Spalt, der bewegliche Schaltkontakt ragt in diesen Spalt. Während er bei Überschreitung einer Druckschwelle den einen festen Kontakt und bei Unterschreitung einer Druckschwelle den anderen festen Kontakt berührt, kann er in einem aktiven Druckerfassungsbereich zwischen beiden Kontakten pendeln und schwebend entweder keinen der beiden festen Kontakte berühren oder beide festen Kontakte mit bestimmten druckabhängigen Tastverhältnis abwechselnd berühren.

Der erfindungsgemäße Drucksensor arbeitet nach dem Schalterprinzip. Dennoch liefert er Signale, aus denen sich auf einfache Weise ein Istwert-Signal zur Führung eines Proportionalreglers ableiten lässt. Im Gegensatz zu einem Druckwächter, der eine Schalthysterese benötigt, wird bei dem erfindungsgemäßen Sensor ein elektrischer Schaltkontakt ohne Schnappmechanismus von einer Druckmembran angetrieben. Dem Schaltkontakt können ein oder zwei feste Kontakte zugeordnet sein. Eine Einstellfeder mit variabler Vorspannung gestattet dabei auf einfache mechanische Weise die Einstellung eines Drucksollwerts durch Verschiebung eines Druckoffsets des Drucksensors. Sobald ein Gleichgewicht zwischen dem auf der Membran lastenden Druck und der Federvorspannung hergestellt ist, bewegt sich der Schaltkontakt von einem festen Kontakt weg und zu dem gegenüber liegenden festen Kontakt hin. Bei sehr kleinen Kontaktabständen bewirkt dies, dass die elektrische Verbindung zu dem einen Kontakt kurz unterbrochen, dann aber zu dem anderen Kontakt wieder hergestellt wird. Mit zunehmendem Druck wird der gegenüberliegende feste Kontakt erreicht, aber auch zeitweise wieder unterbrochen. Erst bei deutlich angestiegenem Druck ist der andere Kontakt dauerhaft geschlossen.

Zur Herstellung der Eigensicherheit wird beim Start des Regelprozesses durch geeignete Druckbeaufschlagung geprüft, dass sowohl der erste feste Kontakt wie auch der zweite feste Kontakt mit dem Schaltkontakt in Berührung gebracht werden können. Danach kann durch geeignete Signalverarbeitung der Druckbereich, in dem keine stabile Kontaktgabe an den beiden festen Kontakten erfolgt, als Druckerfassungsbereich und somit als Regelbereich verwendet werden. Zur geeigneten Signalverarbeitung kann der Mittelwert der Ströme oder Spannungen an den beiden festen Kontakten jeweils getrennt ermittelt werden. Die beiden erhaltenen Signale können voneinander subtrahiert werden. Das erhaltene Differenzsignal kennzeichnet den Druck. Die Verarbeitung der Signale kann durch eine Hardwareschaltung oder auch durch einen Mikrocontroller erfolgen. Damit ist eine Auswerteschaltung geschaffen, die einen Zwischenzustand erfasst, in der keine der beiden festen Kontakte eine dauernde elektrische Verbindung etabliert ist. Dabei muss eine geeignete Beobachtungszeit zugrunde gelegt werden, innerhalb derer eine Kontaktunterbrechung auftreten muss, damit keine "dauernder" Kontaktgabe vorhanden ist. Eine solche dauernde Kontaktgabe liegt bspw. vor, wenn über einen Probe- oder Testzeitraum von z.B. einer Sekunde keine Kontaktunterbrechung erfolgt.

Durch das ständige Schließen und Öffnen zumindest eines Kontakts der erfindungsgemäßen Vorrichtung im aktiven Bereich derselben, ist eine Selbstüberwachungsmöglichkeit und Eigensicherheit des Drucksensors gegeben. Zum Beispiel kann der Regler eine Überwachungsroutine enthalten, die den Sensor nur dann als intakt und betriebsfähig ansieht, wenn fortwährende Schaltspiel auftreten.

Weitere Einzelheiten vorteilhafter Details der erfindungsgemäßen Vorrichtung und des erfindungsgemäßen Verfahrens zur Druckregelung ergeben sich aus der Figurenbeschreibung, den Zeichnungen und Ansprüchen. Es zeigen:
Figur 1 ein System mit erfindungsgemäßer Druckregelung, in schematischer Blockdarstellung,
Figur 2 und 3 Zeitdiagramme zur Veranschaulichung des Betriebs des Druckreglers und insbesondere seines Drucksensors,
Figur 4 und 5 weitere Diagramme zur Veranschaulichung der Funktion des Drucksensors.

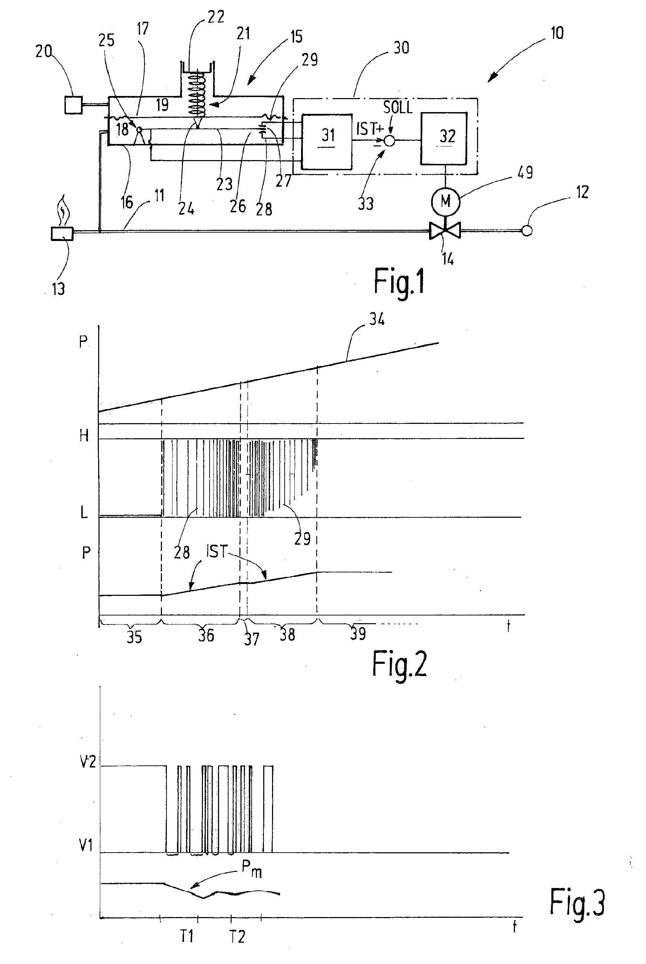

In Figur 1 ist ein Gasdruckregler 10 veranschaulicht, der dazu dient, den Gasdruck in einer Leitung 11 konstant zu halten. Die Leitung 11 führt von einer Gasquelle 12 bzw. speisenden Leitung zu einem Verbraucher 13. In der Leitung 11 ist ein Ventil 14 angeordnet, über das der Gaszustrom zu dem Verbraucher 13 und somit auch der Gasdruck in dem zwischen dem Verbraucher 13 und dem Ventil 14 liegenden Leitungsabschnitt regulierbar ist. Bei dem Verbraucher 13 kann es sich um einen Brenner oder einen sonstigen Gasverbraucher handeln.

Zur Erfassung des Drucks in der Leitung 11 dient ein Drucksensor 15, der als schaltender Sensor ausgebildet ist. Er weist ein Gehäuse 16 auf, das mindestens eine von einer Membran 17 getrennte Kammer 18 enthält. Die auf der gegenüber liegenden Seite der Membran 17 liegende Kammer 19 kann mit einer Druckreferenz 20 oder der Umgebung verbunden sein.

Der Drucksensor 15 enthält eine die Membran 17 belastende Feder 21, hier bspw. in Gestalt einer Schraubenfeder, die sich mit einem Ende an der Membran 17 und mit ihrem anderen Ende an dem Gehäuse 16, z.B. an einer Einstellschraube 22 abstützt. Es können auch sonstige einstellbare oder nicht einstellbare Federmittel vorgesehen sein.

Durch die Einstellschraube 22 ist die auf die Membran 17 einwirkende Federvorspannung justierbar, so dass der von dem Drucksensor 15 zu erfassende Druckbereich wunschgemäß eingestellt werden kann.

Der Drucksensor 15 enthält außerdem mindestens einen beweglichen Schaltkontakt 23, der z.B. über einen Stößel, ein Gelenk oder eine sonstige Verbindung 24 vorzugsweise mit dem Zentrum der Membran 17 verbunden ist. Der Schaltkontakt 23 kann als längliche Kontaktzunge ausgebildet sein, deren Ende 25 beweglich an dem Gehäuse 16 gelagert ist. Der Anlenkpunkt kann fest oder zur Einstellung eines gewünschten Sensorbereichs auch z.B. durch eine Einstellschraube verstellbar ausgebildet sein. Vorzugsweise ist der Abstand zwischen der Verbindung 24 und dem Ende 25 ein erster kurzer Hebel. Das von Ende 25 abliegende Ende 26 weist einen Kontaktbereich 27 auf, der ausgehend von dem Ende 25 einen langen Hebel bildet und der zwischen zwei an dem Gehäuse 16 gehaltene feste Kontakte 28, 29 ragt. Zwischen den beiden festen Kontakten 28, 29 ist ein enger Spalt vorhanden, in den der Kontaktbereich 27 ragt.

An dem Schaltkontakt 23 und an die festen Kontakte 28, 29 ist ein Regler 30 angeschlossen, der einen Signalauswerteblock 31, einen Regelverstärker 32 und, falls gewünscht, einen Subtrahierblock 33 enthält. Der Regelverstärker 32 kann zusätzlich zu seiner Proportionalcharakteristik noch integrierende und gegebenenfalls differenzierende Charakteristik aufweisen.

Der Subtrahierblock 33 kann vorgesehen werden, um das von dem Auswerteblock 31 gelieferte Istwertsignal mit einem Sollwertsignal zu vergleichen bzw. die Differenz aus beiden zu bilden. Die Differenz stellt die Regelabweichung dar, die dem Regelverstärker 32 zugeführt wird.

Wenn der Subtrahierblock 33 hingegen entfällt, ist die Einstellschraube 22 zur Einstellung des Drucksollwerts zu nutzen. Der Auswerteblock 31 bestimmt aus den von dem Drucksensor gelieferten Schaltsignalen den Istwert des Drucks. Zur Verdeutlichung der Arbeitsweise wird auf Figur 2 verwiesen. In einem oberen Diagramm veranschaulicht eine Kurve 34 den Verlauf eines über Zeit langsam ansteigenden Gasdrucks. Dieser wird der Kammer 18 zugeleitet und lastet auf der Membran 17. Ist der Gasdruck gering, wie in Figur 2 in einem Abschnitt 35 angedeutet, ist die Kraft der Feder 21 größer als die von dem Gasdruck aufgebrachte Kraft. Die Membran 17 wird in eine untere Position gedrängt. Der Schaltkontakt 23 liegt dauerhaft an dem festen Kontakt 28 an. Es entsteht das in Figur 2 veranschaulichte Signal L infolge des fortwährenden elektrischen Kontakts des Schaltkontakts 23 mit dem festen Kontakt 28.

Steigt der Gasdruck allmählich weiter an, beginnt der Schaltkontakt 23 von dem festen Kontakt 28 abzuheben. Dies ist in Figur 2 in Abschnitt 36 veranschaulicht. Der Kontaktwiderstand zwischen dem Kontaktbereich 27 und dem ersten festen Kontakt 28 wird stochastisch größer. Wird über einen entsprechenden Vorwiderstand eine Spannung an den Kontakt 28 und den Schaltkontakt 23 angelegt, springt diese innerhalb des Abschnitts 36 mehrfach auf einen von 0 verschiedenen Wert, was in Figur 2 mit dem logischen Wert "H" bezeichnet ist. Der Druckanstieg kann dabei nicht nur zur fortwährenden Unterbrechung des Stromflusses zwischen dem Kontakt 28 und dem Schaltkontakt 23, auch zu einer elektrischen Kontaktgabe zwischen den Schaltkontakt 23 und dem zweiten festen Kontakt 29 kommen. Das wiederholte Unterbrechen der elektrischen Verbindung zwischen dem Schaltkontakt 23 und dem festen Kontakt 28 ist in Figur 2 in dem Bereich 36 veranschaulicht. Das wiederholte Unterbrechen der elektrischen Verbindung zwischen dem Schaltkontakt 23 und dem festen Kontakt 29 ist in Figur 2 in dem Bereich 38 veranschaulicht.

Das Verhältnis der elektrischen Kontaktgabe des Schaltkontakts 23 zu dem festen Kontakt 28 und dem festen Kontakt 29 kann dabei zur Bestimmung des Druckwerts genutzt werden. Wie das untere Diagramm in Figur 2 zeigt, wird in dem Bereich 36 von dem Auswerteblock 31 ein Signal IST abgegeben, das den Istwert des Drucks kennzeichnet.

Bei einem weiteren Anstieg des Drucks kann der Schaltkontakt 23 in einem Schwebebereich zwischen den beiden festen Kontakten 28, 29 gelangen und gegebenenfalls keinen von beiden nennenswert berühren. In diesem engen Bereich 37, der im Idealfall dem Drucksollwert entspricht, werden keine Schaltimpulse erzeugt. Steigt der Druck hingegen über diesen Wert hinaus an, werden in dem Bereich 38 wiederum Schaltsignal erzeugt, wobei nun vorwiegend der obere Kontakt 29 und weniger der untere Kontakt 28 kontaktiert wird. Mit zunehmendem Tastverhältnis zugunsten des oberen festen Kontakts 29 wird wiederum die dargestellte Kurve für den Druck P gemessen. Ist der Druck noch größer, wird der Bereich 39 erreicht, indem dauernde Kontaktgabe zwischen dem Schaltkontakt 23 und dem oberen festen Kontakt 29 erreicht ist. Die Bereiche 35 und 39 zeigen nur das Unter- bzw. Überschreiten von Druckgrenzen an. Eine analoge Druckerfassung erfolgt hier nicht.

Figur 3 veranschaulicht einen Ausschnitt von denkbaren Signalverläufen, die sich an dem Schaltkontakt 23 ergeben, wenn der untere Kontakt 28 und der obere Kontakt 29 auf unterschiedlichen Potentialen V1, V2 liegen. Die Schaltspiele können jeweils in Zeitintervallen T1, T2 usw. untersucht werten. Druckabhängig ergeben sich in den Zeitintervallen T1, T2 usw. verschiedene Tastverhältnisse zwischen Einschalten und Ausschalten, d.h. verschiedenen Verhältnissen der Zeiten, zwischen denen der Schaltkontakt 23 das Potential V1 oder das Potential V2 führt. Dem Tastverhältnis entsprechend kann eine gemittelte Druckkurve PM ermittelt werden. Dies gelingt schon mit einem einzigen festen Kontakt 28, kann aber zur Verbesserung der Funktion besser mit zwei festen Kontakten 28, 29 durchgeführt werden.

Die Zeitintervalle T1, T2 usw. können auch dazu genutzt werden, die Funktion des Sensors 15 zu verifizieren. Tritt in einem Zeitintervall T1, T2 usw. oder in mehreren aufeinander folgenden solchen Zeitintervallen kein Schaltspiel auf, kann auf einen Sensorfehler geschlossen werden. Die Zeitintervalle T1, T2 usw. können einige Zehntelsekunden, eine Sekunde oder wenige Sekunden lang sein.

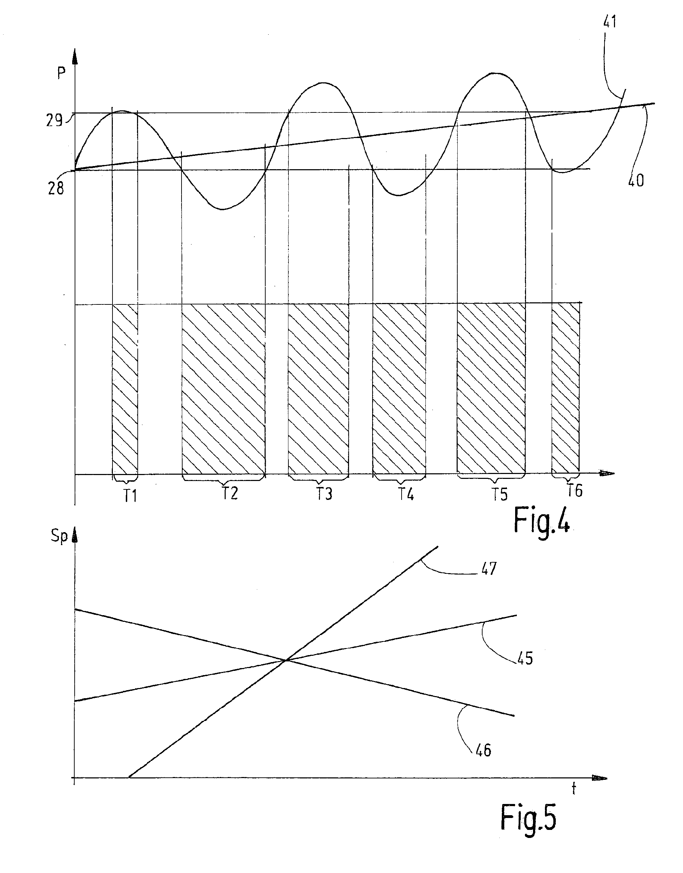

Zur Erläuterung der Entstehung pulsbreitenmodulierter Sensorsignale wird in nachfolgenden davon ausgegangen, dass der Schaltkontakt 23 auf einen bestimmten Potential gehalten ist, aus dem die festen Kontakte 28 oder 29 jeweils mit einem Strom gespeist werden können, wenn der Schaltkontakt 23 den jeweiligen festen Kontakt 28 oder 29 berührt. Figur 4 veranschaulicht einen im Mittel einer Kurve 40 folgend ansteigenden Druck. Zur weiteren Verdeutlichung soll angenommen werden, dass dem Druck eine geringe Schwingung überlagert ist, die in Figur 4 durch die Kurve 41 symbolisiert ist. Diese Schwingung ist symmetrisch zu der Kurve 40. Entsprechend pendelt der Schaltkontakt 23 zwischen den festen Kontakten 28, 29. Deren Positionen sind in Figur 4 durch die entsprechenden Bezugszeichen gekennzeichnet. An dem Kontakt 29 entstehen die Stromimpulse T1, T3 und T5. Infolge des zunehmenden Drucks nimmt deren Impulsbreite und somit deren Tastverhältnis zu. Der Mittelwert wird in Figur 5 durch die Kurve 45 symbolisiert. Hingegen nimmt mit zunehmendem Druck die Zeitdauer ab, in der der Schaltkontakt 23 jeweils an den festen Kontakt 28 verweilt. Dies zeigen die Zeitintervalle T2, T4 und T6. Ihr Mittelwert wird in Figur 5 durch die Kurve 46 symbolisiert. Die Differenz aus den beiden kurven 45, 46 ergibt die Kurve 47, die letztendlich einen Zusammenhang zwischen einem Drucksignal SP und der zeit abbildet. Im vorliegenden Ausführungsbeispiel wird dieses Drucksignal SP von dem Auswerteblock 31 als Signal IST abgegeben. Die Funktion ist prinzipiell gleich, auch wenn die Schwingung keiner Sinusfunktion folgt. Auch bei einer Stochastischen Membranebewegung um den durch die Linie 40 markierten Druckmittelwert entstehen an den beiden Kontakten 28, 29 Signale mit wechselnden Tastverhältnissen, wobei die Differenz der Mittelwerte dieser Tastverhältnisse wieder der gesuchte Druck ist.

Erfindungsgemäß wird ein Druckregler zur Erfassung eines Gasdrucks mit einem Drucksensor 15 versehen, der eine unter Federvorspannung stehende Membran 17 aufweist. Diese betätigt einen Schaltkontakt 23, dem mindestens ein fester Kontakt 28 zugeordnet ist. Vorzugsweise ist der Schaltkontakt 23 zwischen zwei festen Kontakten 28, 29 angeordnet. Durch gezieltes Einstellen der Federvorspannung wird ein Druckpunkt eingestellt, bei dem ein Kräftegleichgewicht zwischen der vorgespannten Feder und dem auf der Membran 17 wirkenden Druck vorhanden ist. Der bewegliche Kontakt 23 steht in diesem Zustand in einem indifferenten Gleichgewicht und kann sowohl den ersten festen Kontakt 28 wie auch den zweiten festen Kontakt 29 berühren. In diesem Schwebezustand wird der bewegliche Kontakt 23 von der Elektronik gehalten.

Durch Auswerten des Verhältnisses der Zeiten, in denen der bewegliche Kontakt 23 den ersten festen Kontakt 28 berührt, zu den Zeiten, in denen der bewegliche Kontakt 23 den zweiten festen Kontakt 29 berührt, lässt sich ein Signalwert ermitteln, der den Istwert des Drucks kennzeichnet. Obwohl der Drucksensor 15 nur schaltende Kontakte 23, 28, 29 aufweist, ermöglicht er eine analoge Druckerfassung. Vorzugsweise ist der Schaltkontakt 23 hysteresefrei.

### Bezugszeichenliste:

- 10: Gasdruckregler
- 11: Leitung
- 12: Gasquelle
- 13: Verbraucher
- 14: Ventil
- 15: Drucksensor
- 16: Gehäuse
- 17: Membrane
- 18: erste Kammer des Drucksensors 15
- 19: zweite Kammer des Drucksensors 15
- 20: Druckreferenz
- 21: Feder
- 22: Einstellschraube
- 23: Schaltkontakt
- 24: Verbindung
- 25: Ende des Schaltkontakts 23
- 26: zweites Ende des Schaltkontakts 23
- 27: Kontaktbereich
- 28: erster fester Kontakt
- 29: zweiter fester Kontakt
- 30: Regler
- 31: Auswerteblock
- 32: Regelverstärker
- 33: Addierblock
- 34: Kurve für Gasdruck
- 35 - 39: Bereiche
- IST: IST-Signal für den Druck
- P: Druck
- t: Zeit
- H: logisch High
- L: logisch Low
- V1, V2: Potentiale
- Pm: gemittelte Druckkurve
- 40: Kurve Druck
- 41: Kurve Schwingung
- 45: Kurve Mittelwert Tastverhältnis T1, T3, T5
- 46: Kurve Mittelwert Tastverhältnis T2, T4, T6
- 47: Differenzkurve
- Sp: Drucksignal
- 49: Magnet
- T1, T2: Zeitintervall

## Patentansprüche

1. Vorrichtung zur Druckerfassung,
mit einem ersten festen Kontakt (28),
mit einer druckbeaufschlagten Membrane (17),
mit einem Schaltkontakt (23), der auf den festen Kontakt (28) hin und von diesem weg beweglich angeordnet und mit der Membrane (17) verbunden ist, um durch Bewegung der Membrane (17) in elektrische Verbindung mit dem festen Kontakt (28) oder in elektrisch von diesem getrennten Zustand überführbar ist,
mit einer Auswerteschaltung (31) zur Erfassung eines Zwischenzustands, bei dem der bewegliche Schaltkontakt (23) wiederholt kurzzeitig mit dem festen Kontakt (28) in elektrische Verbindung tritt.

2. Vorrichtung nach Anspruch 1, **dadurch gekennzeichnet, dass** die Auswerteschaltung (31) einen Zwischenzustand erfasst, bei dem die elektrische Verbindung zwischen dem Schaltkontakt (23) und dem festen Kontakt (28) fortwährend in Aufeinanderfolge hergestellt und getrennt ist.

3. Vorrichtung nach Anspruch 1, **dadurch gekennzeichnet, dass** Auswerteschaltung (31) zur Erfassung des Zwischenzustands bei Wechsel des Schaltzustands des Schaltkontakts (23) prüft, ob der Schaltzustand innerhalb einer Zeitspanne erneut mindestens einmal wechselt, um anhand dessen das Vorliegen des Schaltzustands zu erfassen.

4. Vorrichtung nach Anspruch 1, **dadurch gekennzeichnet, dass** sie einen zweiten festen Kontakt (28) umfasst, auf den der Schaltkontakt (23) zu und von dem der Schaltkontakt (23) weg bewegbar ist, um in und außer elektrische Verbindung zu gelangen.

5. Vorrichtung nach Anspruch 1, **dadurch gekennzeichnet, dass** die Kontakte (28, 29) einen Spalt festlegen, in dem der Schaltkontakt (23) bewegbar ist.

6. Vorrichtung nach Anspruch 1, **dadurch gekennzeichnet, dass** der Zwischenzustand durch innerhalb eines kurzen Zeitintervalls stattfindende schnelle abwechselnde Kontaktgabe des Schaltkontakts (23) an den beiden festen Kontakten (28, 29) gekennzeichnet ist.

7. Vorrichtung nach Anspruch 1, **dadurch gekennzeichnet, dass** der Zwischenzustand durch während eines kurzen Mindestzeitintervalls fehlende Kontaktgabe des Schaltkontakts (23) an den beiden festen Kontakten (28, 29) gekennzeichnet ist.

8. Vorrichtung nach Anspruch 1, **dadurch gekennzeichnet, dass** der Zwischenzustand durch eine innerhalb eines kurzen Zeitintervalls stattfindende stochastische Kontaktgabe des Schaltkontakts (23) an den beiden festen Kontakten (28, 29) gekennzeichnet ist

9. Vorrichtung nach Anspruch 1, **dadurch gekennzeichnet, dass** der Schaltkontakt (23) hysteresefrei ausgebildet ist.

10. Vorrichtung nach Anspruch 1, **dadurch gekennzeichnet, dass** zur Erzeugung eines Sensorsignals (IST) die während eines Zeitintervalls aufsummierten Schließzeiten (T1, T3, T5) und die aufsummierten Offenzeiten ausgewertet werden.

11. Verfahren zur Druckregelung mittels eines hysteresefreien Druckschalters nach Anspruch 1, bei dem ein zwischen dauerndem Öffnen und dauerndem Schließen des Schaltkontakts (23) liegender Zwischenzustand des Schaltkontakts (23) zur Signalgabe ausgewertet wird, bei dem ein Stromfluss zwischen dem festen Kontakt (28) und dem Schaltkontakt (23) während eines Zeitintervalls mehrfach zugelassen und unterbrochen wird.

12. Verfahren nach Anspruch 11, **dadurch gekennzeichnet, dass** das Verhältnis zwischen Ein-Zeiten und Aus-Zeiten des Stromflusses an dem Schaltkontakt (23) als Drucksignal genutzt wird.

13. Verfahren nach Anspruch 11, **dadurch gekennzeichnet, dass** das Verhältnis zwischen Ein-Zeiten (T1, T3, T5) des einen festen Schaltkontakts (28) zu den Ein-Zeiten (T2, T4, T6) des anderen festen Schaltkontakts (29) als Drucksignal genutzt wird.

14. Verfahren nach Anspruch 11, **dadurch gekennzeichnet, dass** die in einer Zeitspanne auftretenden Ein-Zeiten (T1, T3, T5) des einen festen Schaltkontakts (28) mit den in dem gleichen Zeitintervall auftretenden Ein-Zeiten (T2, T4, T6) des anderen festen Schaltkontakts (29) rechnerisch verarbeitet und als Drucksignal genutzt werden.

15. Verfahren nach Anspruch 14, **dadurch gekennzeichnet, dass** die rechnerische Verarbeitung eine Subtraktion ist.
